# FASCICULE DE BREVET EUROPEEN

(11) **EP 3 066 060 B1**
(45) Date de publication et mention de la délivrance du brevet: **08.08.2018**
(21) Numéro de dépôt: 14809477.4
(22) Date de dépôt: 07.11.2014
(51) Int. Cl.: C04B 28/04, C04B 28/06, C04B 28/14, C04B 40/00, C04B 103/32, C04B 111/00, C04B 111/62

(54) **COMPOSITION FLUIDIFIANTE SOUS FORME DE POUDRE ET SON PROCÉDÉ DE PRÉPARATION**
NETZMITTEL IN FORM EINES PULVERS UND DESSEN HERSTELLUNGSVERFAHREN
WETTING COMPOSITION TAKING THE FORM OF A POWDER AND ITS PREPARATION PROCESS

(30) Priorité: 07.11.2013 FR 1360919
(43) Date de publication de la demande: 14.09.2016
(73) Titulaire: Kerneos, 92800 Puteaux (FR)
(72) Inventeur: BOUSTINGORRY, Pascal, F-91650 Breuillet (FR); MAITRASSE, Philippe, F-45430 Checy (FR); BOUSSEAU, Jean-Noël, F-01360 Loyettes (FR); TAQUET, Pascal, F-38540 Grenay (FR); ESTIVAL, Jacques, F-38300 Bourgoin (FR)
(74) Mandataire: Jacobacci Coralis Harle
(86) Numéro de dépôt international: PCT/FR2014/052865
(87) Numéro de publication internationale: WO 2015/067911

(56) Documents cités:
- FR-A1- 2 776 285
- FR-A1- 2 851 937
- US-A1- 2013 122 299

## Description

### Domaine de l'invention

La présente invention concerne une composition fluidifiante sous forme de liquide ou de poudre, un procédé de préparation de ladite composition fluidifiante, un mortier sec et un béton incorporant ladite composition fluidifiante, ainsi que des revêtements préparés à partir dudit mortier sec ou dudit béton, tels que des enduits de préparation et revêtement de sol.

### Etat de la technique

La mise en oeuvre et la performance des matériaux comprenant des liants hydrauliques ont été améliorées avec l'utilisation des adjuvants polymères superplastifiants dans les formulations. Leur rôle est d'assurer à la suspension de départ une fluidité maximale pour une teneur en eau minimale afin de la rendre facile à manipuler, tout en évitant les effets néfastes des excès d'eau sur sa stabilité à l'état frais, sur sa durabilité et ses performances à l'état durci.

Les éthers de polycarboxylates se sont avérés être des composants particulièrement efficaces comme superplastifiant. Cette nouvelle génération de copolymères est à base de chaînes poly(oxyde d'alkylène) greffées sur une chaîne d'acide poly-carboxylique. De tels produits ont une structure facilement contrôlable et sont bien connus pour leurs propriétés dispersantes. Ils sont chargés négativement, de par la présence des groupes carboxylates, ce qui leur permet de s'adsorber sur les particules de liant hydraulique, et d'assurer une répulsion électrostatique, tandis que les greffons de poly(oxyde d'alkylène), qui ne s'adsorbent pas, apportent une "répulsion stérique".

Ces composés peuvent être utilisés dans des formulations de bétons, ainsi que dans des formulations d'enduits autonivelants.

On connait de l'art antérieur le document US 6,545,067 qui décrit un mélange plastifiant afin de réduire la proportion des pores d'air présent dans un matériau de construction contenant du ciment lorsque le plastifiant est à base de polycarboxylates. En particulier, le mélange plastifiant comprend un agent fluidifiant à base de polycarboxylates et au moins un agent de désaération, tel que des polyalkylènepolyamines butoxylées ou leurs sels.

Ce document ne donne toutefois aucune indication afin d'optimiser la fluidité de mortiers autonivelants.

On connait également de l'art antérieur, le document US 2013/122299 qui décrit un précurseur d'éthers de polycarboxylate sous forme solide/sec utilisable en tant que superplastifiant, par exemple, pour le domaine cimentaire.

Le document FR 2 776 285 décrit un dispersant hydrosoluble pour compositions de ciment. En particulier, le dispersant est obtenu par estérification partielle catalysée par l'intermédiaire d'une base, en faisant réagir : au moins un acide polycarboxylique et au moins un polyéther contenant un groupe hydroxyle libre.

Selon l'invention, on appelle «enduit autonivelant » un mortier fluide qui permet d'obtenir, après application ou coulage sur un support horizontal (sol), une surface exempte d'irrégularité et parfaitement plane sans traitement mécanique de la surface (tel que notamment un ponçage).

De part leur facilité de mise en oeuvre, ces enduits sont largement utilisés pour rattraper les inégalités de niveau des dalles brutes de construction ou des surfaces horizontales de toute nature, sur lesquelles sont disposés ensuite des revêtements de finition, tels que le plancher collé, le carrelage, les dalles ou revêtements en matière plastique ou encore de la moquette.

Sur les chantiers importants, les enduits autonivelants sont généralement mis en oeuvre à l'aide de machines de mélange, puis pompés. Ces machines présentent des spécificités, au niveau du gâchage (mélange avec l'eau) du mortier.

La poudre de mortier et l'eau sont introduites dans la machine, et le mélange s'effectue au moyen d'une vis sans fin. Le temps de mélange est très court, de l'ordre de quelques secondes, et l'énergie de cisaillement est faible, comparativement à un malaxage effectué avec un agitateur à vitesse de rotation rapide.

Le gâchage ainsi réalisé, le mortier frais est pompé pour être transporté, via un tuyau flexible, sur son lieu de placement. Il s'étale alors aisément, du fait de son caractère autonivelant, et ne nécessite qu'une légère intervention manuelle avec une spatule, un rouleau piqueur ou autre.

Un mélange trop rapide poudre de mortier / eau dans la machine peut donner lieu à une mauvaise qualité de la pâte obtenue, liée à une mauvaise dispersion du mortier. Dans ce cas, la viscosité du mortier frais entrant dans la pompe sera trop élevée et conduira à une augmentation de la pression et à une baisse involontaire du débit, et donc de la productivité. De plus, une mauvaise dispersion conduit à un mortier hétérogène présentant des défauts. Face à cette situation, la tentation de l'applicateur est d'augmenter le taux d'eau, ce qui conduit à une diminution des performances : phénomène de sédimentation et ressuage, diminution des propriétés mécaniques.

Devant une telle situation, il y a deux possibilités, soit augmenter le temps de mélange, ce qui nuit à la productivité, soit améliorer la vitesse de dispersion du mortier.

L'accroissement de la vitesse de mouillage/dispersion dans l'eau du mortier passe par celle de l'efficacité de l'agent fluidifiant (superplastifiant), l'éther de polycarboxylate, en l'occurrence. Et, lorsqu'on parle de temps de mélange de quelques secondes, l'utilisation d'éthers de polycarboxylates traditionnels ne permet pas d'obtenir des performances suffisantes.

Il existe donc un besoin réel de développer un nouvel agent fluidifiant permettant notamment un meilleur contrôle de la rhéologie de compositions comprenant un liant hydraulique (ciment Portland, ciment alumineux, etc.), telles que des compositions de mortier (enduit de lissage à caractère autonivelant) ou de béton.

### Description détaillée de l'invention

La présente invention a ainsi pour but de proposer une nouvelle composition fluidifiante qui évite tout ou partie des inconvénients précités.

A cet effet, la présente invention a pour objet une composition fluidifiante telle que définie dans le jeu de revendications et comprenant, au moins :
- un superplastifiant choisi parmi les éthers de polycarboxylates,
- et 1 à 20 parties en poids, de préférence 2 à 10 et en particulier 3 à 7 parties en poids (sec), d'au moins un acide sulfonique d'hydrocarbure aromatique ou d'un de ses sels choisi parmi les sels alcalins, les sels alcalinoterreux ou un de leurs mélanges, pour 100 parties en poids (sec) de superplastifiant, ledit superplastifiant représentant au moins 40%, en poids, par rapport au poids total de ladite composition fluidifiante sèche..

Par une gamme entre 1 et 20, on entend comme comprise les valeurs 3 ; 3,5 ; 4 ; 4,5 ; 5 ; 5,5 ; 6 ; 6,5 ; 7 ; 7,5 ; 8 ; 8,5 ; 9 ; 9,5 ; 10 ; 10,5 ; 11 ; 11,5 ; 12 ; 12,5 ; 13 ; 13,5 ; 14 ; 14,5 ; 15 ; 15,5 ; 16 ; 16,5 ; 17 ; 17,5 ; 18 ; 18,5 ; 19 ; 19,5, ou 20.

En particulier, la composition fluidifiante comprend de 3 (non inclus) à 7 parties en poids dudit moins acide sulfonique d'hydrocarbure aromatique ou d'un de ses sels choisi parmi les sels alcalins, les sels alcalinoterreux ou un de leurs mélanges, pour 100 parties en poids (sec) du superplastifiant. Le demandeur a en effet découvert, de manière surprenante, que l'utilisation d'une composition fluidifiante comprenant : au moins un superplastifiant de type éther de polycarboxylate et au moins un acide sulfonique d'hydrocarbure aromatique ou un de ses sels, permet d'améliorer significativement la cinétique d'action dudit superplastifiant.

Selon l'invention, on entend par l'amélioration de la cinétique d'action d'un superplastifiant ou d'une composition fluidifiante une amélioration de :
- la vitesse de dispersion des formulations de mortier ou de béton comprenant la composition fluidifiante,
- la vitesse d'obtention de la viscosité cible du mortier frais ou du béton, puis sa stabilité.

En outre, de manière surprenante, les compositions fluidifiantes de l'invention permettent d'obtenir les performances attendues en utilisant des proportions d'éther de polycarboxylate en poids plus faible par rapport au poids total du mortier.

Les compositions fluidifiantes de l'invention se présentent, soit sous forme de liquide, soit sous forme de poudre. Généralement, la forme liquide convient pour préparer des compositions de béton, tandis que la forme poudre convient généralement pour préparer des formulations de mortiers prêts à l'emploi, tels que les enduits autonivelants.

A moins qu'il n'en soit spécifié autrement, l'indication d'un intervalle de valeurs de « X à Y », dans la présente invention, s'entend comme incluant les valeurs X et Y.

Tel qu'indiqué précédemment, la composition fluidifiante comprend au moins un acide sulfonique d'hydrocarbure aromatique ou un de ses sels.

Par « un de ses sels », on entend un sel choisi parmi les sels alcalins, les sels alcalinoterreux ou un de leurs mélanges ».

Par « hydrocarbure aromatique », on entend un composé organique, c'est à dire contenant essentiellement des atomes de carbone et d'hydrogène, dont au moins un fragment répond à la règle d'aromaticité de Hückel. Un hydrocarbure aromatique peut par exemple contenir un cycle benzénique.

L'acide sulfonique d'hydrocarbure aromatique de la composition fluidifiante selon l'invention comprend ainsi un hydrocarbure aromatique substitué par au moins un groupe sulfonique.

Il peut être choisi par exemple parmi : l'acide benzène sulfonique, l'acide p-phénol sulfonique, l'acide crésol sulfonique, l'acide o-crésol sulfonique, l'acide m-crésol sulfonique, l'acide para-toluène-sulfonique, l'acide 2,4-xylène sulfonique, l'acide 2,5-xylène sulfonique, l'acide dodécyl-benzène sulfonique, les acides alkyldiphényloxyde disulfoniques, ou un de leurs sels choisi par exemple parmi les sels d'alcalins et d'alcalinoterreux, ou un de leurs mélanges. De préférence, on choisira les sels de sodium, de potassium ou leur mélange.

L'acide sulfonique d'hydrocarbure aromatique est avantageusement l'acide para-toluène sulfonique ou un de ses sels, tels que son sel de sodium.

De manière inattendue et comme l'illustrent les exemples décrits ci-dessous, il a été découvert que l'acide sulfonique d'hydrocarbure aromatique selon l'invention permettait d'améliorer les propriétés du superplastifiant à base d'éthers de polycarboxylates.

Selon l'invention, les éthers de polycarboxylates peuvent être choisis parmi : les copolymères statistiques, alternés, séquencés ou à structure en forme de peigne comprenant au moins un motif structurel contenant un oxyalkylène glycol et au moins un motif acide carboxylique.

On utilise préférentiellement des polycarboxylates de polyalkylène glycols dont la chaîne principale contient des groupes carboxyle et la ou les chaînes latérales contiennent des groupes oxyalkylène glycol.

Ces polymères peuvent être présents soit sous forme d'acide libre, soit sous forme de leurs sels.

Des acides carboxyliques ou des dérivés d'acides carboxyliques insaturés qui conviennent sont notamment : l'acide acrylique, l'acide méthacrylique, l'anhydride d'acide maléique, l'acide maléique, l'acide fumarique, l'acide itaconique, ainsi que l'anhydride d'acide itaconique.

Les éthers de polycarboxylate peuvent être linéaires, ramifiés et se présenter sous forme en peigne, en étoile ou autres structures.

De préférence, les éthers de polycarboxylates sont choisis parmi : les copolymères d'acides carboxyliques et d'ester carboxyliques de poly (alkylène glycol), les copolymères d'acides carboxyliques et d'amide de poly (alkylène glycol), les copolymères d'acides carboxyliques et d'imide de poly (alkylène glycol), les copolymères d'acides carboxyliques et d'éthers vinyliques de poly (alkylène glycol), copolymères d'acides carboxyliques et d'éthers (méth)allyliques de poly (alkylène glycol), copolymères d'acides carboxyliques et d'éthers d'isoprénol de poly (alkylène glycol), neutralisés ou non neutralisés, et ou de leurs mélanges.

Ces copolymères peuvent aussi être porteurs d'autres groupements chimiques, tels que des groupes amide(s), sulfonate(s), etc.

Les éthers de polycarboxylates convenant pour la présente invention présentent préférentiellement un taux de greffage inférieur ou égal à 25%, en particulier inférieur ou égal à 20%, typiquement inférieure ou égal à 15% et idéalement inférieur ou égal à 10%.

Par « taux de greffage », on entend le rapport entre le nombre de greffons polyalkylènes glycols, et la somme du nombre total de groupements carboxyle et/ou carboxylate et le nombre de greffons polyalkylènes glycols.

Typiquement, la composition fluidifiante comprend au moins 80% et mieux au moins 90% en poids de superplastifiant par rapport au poids total de la composition fluidifiante sèche.

De préférence, la composition fluidifiante sous forme de poudre de l'invention présente une granulométrie inférieure ou égale à 315 µm.

La composition fluidifiante à base d'au moins un superplastifiant selon l'invention peut comprendre en outre un ou plusieurs additifs. Selon l'invention, on entend par « additifs de la composition fluidifiante » des additifs pouvant être ajoutés à cette composition autres que les acides sulfoniques d'hydrocarbure aromatique ou leurs sels.

Avantageusement, la composition fluidifiante sous forme de poudre comprend au moins un agent anti-mottant.

Selon l'invention, les agents anti-mottants peuvent être choisis parmi : les silices précipitées, les silices pyrogénées, les kaolins, l'argile, le carbonate de calcium, ou un de leurs mélanges.

Il est également possible d'utiliser d'autres additifs. On peut citer, de façon non exhaustive, un agent antimousse, ou encore un agent épaississant.

L'invention concerne également un procédé de préparation d'une composition fluidifiante telle que définie ci-dessus comprenant une étape de mélange d'au moins un superplastifiant choisi parmi un éther de polycarboxylate et d'au moins un acide sulfonique d'hydrocarbure aromatique ou un de ses sels choisi parmi les sels alcalins, les sels alcalinoterreux ou un de leurs mélanges,, ledit au moins un acide sulfonique d'hydrocarbure aromatique ou un de ses sels représentant, pour 100 parties en poids dudit superplastifiant, 1 à 20 parties en poids (poids secs), ledit superplastifiant représentant au moins 40 %, en poids, par rapport au poids total de ladite composition fluidifiante sèche.

Selon un mode de réalisation, la composition fluidifiante telle que décrite ci-dessus se présente sous forme liquide et peut être préparée par mélange d'au moins un éther de polycarboxylate et d'au moins un acide sulfonique d'hydrocarbure aromatique dans un solvant, tel que de l'eau (procédé 1).

Selon ce mode, l'éther de polycarboxylate est avantageusement déjà sous forme d'une solution à laquelle on ajoute :
- soit l'acide sulfonique d'hydrocarbure aromatique sous forme de poudre, le mélange étant, après dissolution totale, neutralisé par un ajout d'une base, de préférence l'hydroxyde de sodium, soit son sel de sodium,
- soit l'acide sulfonique d'hydrocarbure aromatique en solution, préalablement neutralisé par une base, de préférence l'hydroxyde de sodium, soit son sel de sodium.

Suite à l'étape de neutralisation par ajout d'une base, le mélange ci-dessus présente de préférence un pH inférieur ou égal à 8, en particulier un pH inférieur ou égal à 7, typiquement entre 5,5 et 7 (bornes incluses) et idéalement de 6,5.

Selon un autre mode de réalisation, la composition fluidifiante telle que décrite ci-dessus se présente sous forme de poudre (procédé 2).

Elle peut être préparée par mélange d'une poudre d'éther de polycarboxylate et d'une poudre d'acide sulfonique d'hydrocarbure aromatique ou d'un de ses sels. Dans ce cas, on utilise préférentiellement, un éther de polycarboxylate déjà sous forme de poudre présentant, en général une granulométrie inférieure ou égale à 315 µm, et un acide sulfonique d'hydrocarbure aromatique, également sous forme de poudre.

La composition fluidifiante sous forme de poudre peut être également préparée à partir d'un procédé de préparation comprenant les étapes suivantes:
a) une étape de mélange d'au moins un superplastifiant choisi parmi un éther de polycarboxylate et d'au moins un acide sulfonique d'hydrocarbure aromatique ou d'un de ses sels, sous formes liquides.
b) une étape de séchage du mélange obtenu à l'étape a).

Le mélange liquide de l'étape a) est obtenu selon le mode opératoire décrit ci-dessus (procédé 1).

L'étape de séchage b) peut-être réalisée par toutes techniques connues de l'homme de l'art, notamment par co-atomisation ou par mise sur support.

La co-atomisation consiste à pulvériser la composition fluidifiante sous forme liquide dans un atomiseur à l'intérieur duquel un flux d'air chaud permet de transformer la composition fluidifiante liquide en poudre.

L'agent antimottant (silice fine), lorsqu'il est présent, peut être introduit en parallèle dans la chambre d'atomisation, ou peut être ajouté à la poudre séchée, par mélange. La quantité d'agent anti-mottant est de préférence, en poids, inférieure ou égale à 5%, typiquement elle est de 2 à 4% par rapport au poids total de la composition fluidifiante sous forme poudre.

La mise sur support est réalisée par absorption du mélange en solution, préférentiellement sur un support d'adsorption minéral à surface spécifique élevée, par exemple à surface spécifique supérieure ou égale à 100 m²/g. Généralement, le support d'adsorption minéral à surface spécifique élevée est une silice à haute surface spécifique, telle qu'une silice précipitée ou une silice pyrogénée.

La mise sur support, suivie du séchage, se fait dans une enceinte, sous vide, à une température d'environ 80°C.

Les autres additifs éventuels (agent anti-mousse, agent épaississant) peuvent être incorporés, soit dans la solution, avant séchage, soit par mélange poudre/poudre.

L'étape de séchage b) permet l'obtention d'une poudre avec un taux d'humidité résiduel généralement inférieur ou égal à 3%, voire inférieur ou égal à 2%, en poids, par rapport au poids total de la composition.

Lorsque la composition fluidifiante est obtenue par séchage par co-atomisation, elle comprend préférentiellement, en poids, par rapport au poids total de ladite composition :
- de 70 à 95%, de préférence de 80 à 95% d'éther de polycarboxylate,
- de 0,7 à 19%, de préférence de 2 à 10% d'acide sulfonique d'hydrocarbure aromatique ou d'un de ses sels,
- de 0 à 5%, de préférence 2 à 4 % d'un agent anti-mottant.

Lorsque la composition fluidifiante est obtenue par séchage par mise sur support, elle comprend préférentiellement, en poids, par rapport au poids total de ladite composition :
- de 35 à 55%, de préférence de 40 à 50% d'éther de polycarboxylate,
- de 0,35 à 11 %, de préférence de 1 à 5% d'acide sulfonique d'hydrocarbure aromatique ou d'un de ses sels,
- de 40 à 60% de support d'adsorption minéral à surface spécifique supérieure ou égale à 100 m²/g.

L'invention concerne également un mortier sec comprenant au moins un liant hydraulique caractérisé en ce qu'il comprend en outre une composition fluidifiante telle que définie ci-dessus.

La composition du mortier sec, en poids, par rapport au poids total de ladite composition, est la suivante:
- de 15 à 50%, de préférence de 30 à 40% de liant hydraulique,
- de 25 à 80%, de préférence de 50 à 70% de charges minérales,
- de 0,01 à 2 %, de préférence de 0,05 à 0,5 % de composition fluidifiante,
- de 0 à 5% d'autres additifs (accélérateur, retardateur, antimousse).

Le liant hydraulique comprend de préférence au moins un ciment alumineux et/ou un ciment Portland et/ou un ou plusieurs sulfates de calcium.

Le « ciment alumineux » est en général défini comme un liant hydraulique dont la teneur en alumine est comprise entre 30 et 80 % en poids par rapport au poids total du liant. A titre de ciment alumineux convenant à l'invention, on peut citer les produits des gammes Ternal ® et SECAR®. Le ciment alumineux peut être sous une phase minéralogique cristallisée choisie parmi CA, C₁₂A₇ ou sous une phase amorphe, ou sous la forme d'un mélange d'au moins une desdites phases minéralogiques cristallisées et d'une phase amorphe. Le ciment alumineux présente de préférence une surface spécifique Blaine supérieure ou égale à 1500 cm²/g, de préférence comprise entre 2000 et 5000 cm²/g.

Le ciment Portland peut être notamment un ciment normalisé selon la norme européenne du ciment EN 197-1.

Les sulfates de calcium peuvent être sous forme d'anhydrite, de gypse ou d'hémihydrate, d'origine naturelle ou synthétique.

On peut également utiliser d'autres liants hydrauliques comme par exemple, la chaux hydraulique ou un ciment sulfo-alumineux.

Selon un mode de réalisation avantageux de l'invention, le liant hydraulique comprend en poids, par rapport au poids total dudit mortier sec, un ciment alumineux, éventuellement un ciment Portland et/ou un ou plusieurs sulfates de calcium:
- de 5 à 35%, de préférence de 15 à 30%, mieux de 15 à 25% de ciment alumineux,
- de 0 à 35%, de préférence de 0 à 10%, mieux de 0 à 5% de ciment Portland,
- de 0 à 15%, de préférence de 0 à 10%, mieux de 5 à 10% de sulfates de calcium.

Selon un autre mode de réalisation avantageux de l'invention, le liant hydraulique est principalement à base de sulfates de calcium. Dans ce cas, le mortier sec comprend, en poids, par rapport au poids total dudit mortier sec de 15 à 50%, de préférence de 30 à 40% de sulfates de calcium.

Le mortier comprend des charges, de préférence des charges minérales. Ces charges minérales représentent, en poids, de 25 à 80%, de préférence 50 à 70% du poids total du mortier sec. Les charges minérales sont de préférence choisies avec une répartition granulométrique allant de 0 mm à 2 mm.

Elles sont choisies parmi les composés siliceux (sable, quartz) ou carbonatés (carbonate de calcium, dolomite..). Les charges minérales comprennent donc des fines ou fillers et des sables. Selon l'invention, les fillers ont une granulométrie comprise entre 0 et 80 µm et le sable a une granulométrie comprise entre 0 et 2 mm, de préférence entre 0 et 800 µm. Les fillers représentent préférentiellement de 10% à 40%, mieux de 20 à 35% en poids et le sable de 10% à 40%, mieux de 20 à 40%, en poids, par rapport au poids total dudit mortier sec.

Le mortier sec selon l'invention comprend généralement plusieurs additifs. Il s'agit d'agents régulateurs de prise, d'agents rhéologiques : épaississants et rétenteurs d'eau, d'agents antimousses et de co-liants que sont les résines redispersables.

Les agents régulateurs de prise comprennent les accélérateurs et les retardateurs. A titre d'accélérateurs, on peut citer le sulfate de lithium, le carbonate de lithium ou le sulfate de potassium. A titre de retardateurs, on peut citer l'acide borique ou les acides carboxyliques, notamment citrique, tartrique, gluconique ainsi que leurs sels correspondants. A titre d'agent rhéologique, on peut citer les agents anti-sédimentation tels que les gommes welan et diutan, la gomme xanthane, les guars, les amidons ou les argiles. A titre d'agent rétenteur d'eau, on peut citer les éthers de cellulose.

L'ensemble des additifs du mortier sec représente, en poids, de 0 à 5% par rapport au poids total dudit mortier sec.

L'invention concerne également un mortier fluide autonivelant. En particulier, le mortier fluide autonivelant est obtenu par gâchage à l'eau du mortier sec tel que défini ci-dessus.

Le ratio massique eau/mortier est inférieur ou égal à 0,5, de préférence inférieur ou égal à 0,3 et mieux encore inférieur ou égal à 0,25.

Le procédé de préparation et de mise en oeuvre d'un mortier fluide autonivelant tel que défini ci-dessus, sur un revêtement, caractérisé en ce qu'il comprend :
a) la préparation du mortier fluide par mélange du mortier sec et d'eau,
b) éventuellement, le pompage du mortier fluide,
c) l'application du mortier fluide sur une surface du revêtement permettant d'aplanir ladite surface sur lequel il est appliqué.

Selon l'invention, l'étape de gâchage peut avoir lieu au sein d'un mélangeur mécanique, avec des temps de mélange très courts (quelques secondes).

L'enduit posé peut avoir une épaisseur comprise entre 3 mm et 10 cm. Il peut s'agir :
- d'un enduit de ré-agréage de sol présentant une épaisseur de 3 à 5 cm qu'il soit destiné à être recouvert ou à rester nu,
- d'une chape (« SLS » : Self Leveling Screed) présentant une épaisseur de 3 à 10 cm.

Un revêtement est ainsi obtenu par application, puis séchage du mortier fluide autonivelant tel que défini ci-dessus.

L'invention concerne également un béton comprenant au moins un liant hydraulique, des granulats généralement choisis parmi le sable et les graviers, de l'eau caractérisé en ce qu'il comprend en outre une composition fluidifiante telle que définie ci-dessus.

La composition du béton en poids sec, par rapport au poids sec total de ladite composition de béton, est la suivante:
- de 0,5 à 50%, de préférence de 2 à 30 % de liant hydraulique,
- de 0 à 50%, de préférence de 0 à 30% de charges minérales (fillers, sables),
- de 10 à 98 %, de préférence de 20 à 95 % de granulats (dont 1 à 99 % de sables et 1 à 99 % des graviers et/ou gravillons présentant une distribution granulométrique supérieure à 2 mm, de préférence allant de 2 à 15 mm, de préférence de 2 à 10 mm)
- de 0,01 à 5 %, de préférence de 0,05 à 1,5 % de composition fluidifiante,
- de 0 à 5% d'autres additifs (accélérateur, retardateur, antimousse, fibres,...).

Les composants du béton comprennent ceux définis pour le mortier sec. Ils comprennent de plus des granulats de granulométrie supérieure à ceux utilisés pour les mortiers.

En effet, par le terme « béton », on entend un mélange d'au moins un liant hydraulique, de granulats, éventuellement d'additifs et éventuellement d'additions minérales, gâchés avec de l'eau.

Par le terme granulats, on entend un ensemble de grains minéraux inférieurs à 125 mm : cela comprend en particulier les sables tels que définis ci-dessus, les gravillons et les graves tels que définis dans la norme EN12620 (2008).

Les caractéristiques des bétons prêts à l'emploi sont notamment précisées dans la norme EN206-1 (2004) et la norme EN 13369 (2004) précise celles des bétons préfabriqués.

Le béton est de préférence obtenu par gâchage à l'eau de la composition de béton en poids sec susmentionnée dans des proportions connues de l'homme du métier. En particulier, le béton est préparé par mélange et/ou malaxage des granulats, des charges minérales, du liant hydraulique, éventuellement des additif et de la composition fluidifiante selon l'invention préalablement mélangé avec l'eau.

Enfin, la présente invention a pour objet l'utilisation d'une composition fluidifiante telle que décrite ci-dessus comme superplastifiant dans une composition comprenant au moins un liant hydraulique, comme un béton ou un mortier sec ou liquide.

### Exemples

Les exemples ci-dessous sont donnés uniquement à titre purement illustratif et non limitatif de la présente invention. Dans les exemples ci-dessous, lorsque l'unité n'est pas mentionnée, les pourcentages sont donnés en poids.

### I. Compositions fluidifiantes

### 1. Matières premières utilisées

Deux compositions fluidifiantes sous forme liquide ont été préparées : une selon l'art antérieur (P1) à titre de comparaison et une selon la présente invention (P2).

La première composition fluidifiante P1 comprend un éther de polycarboxylate (PCE) en solution aqueuse. Elle présente un pH de 6,5 et une teneur en matières sèches de 35 % en poids de PCE. L'éther de polycarboxylate utilisé, dont le taux de greffage est inférieur à 10%, a été obtenu selon un procédé décrit dans le brevet FR2776285.

La deuxième composition fluidifiante P2 selon l'invention est préparée à partir de la première composition fluidifiante P1 à laquelle on ajoute une poudre d'un acide sulfonique d'hydrocarbure aromatique, qui se dissout.

P2 comprend la composition suivante :

**Tableau I**

| **Composants** | **Quantités (g)** | **Extrait (% p/p)** | **Matière sèche (g)** |
|---|---|---|---|
| Composition fluidifiante P1 | 96,35 | 35,00 | 33,72 |
| Acide para-toluène sulfonique monohydrate (**APTS**) | 1,67 | 90,50 | 1,51 |
| Soude à 50% | 1,98 | 50,00 | 0,99 |
| Total | 100,00 | 35,8 | 35,78 |

La soude a été ajoutée afin d'obtenir un pH équivalent à la composition de P1, à savoir 6,5. L'extrait sec de la composition fluidifiante liquide P2 est de 35,8 % de PCE. Le pourcentage d'APTS par rapport à la matière sèche du liquide P2 est de 4.22 %.

### 2. Préparation des compositions fluidifiantes sous forme de poudre

Les compositions fluidifiantes P1 et P2 ont ensuite été séchées selon deux procédés différents, à savoir par atomisation ou par mise sur support.

Trois compositions fluidifiantes sous forme poudre ont été obtenues à partir des compositions fluidifiantes liquides P1 et P2 décrites précédemment.

### - Procédé par atomisation :

Une composition fluidifiante sous forme poudre C2 selon l'art antérieur est obtenue par atomisation de la composition fluidifiante liquide P1. Après obtention de la poudre, on incorpore, par mélange 3 % de silice aerosil® OX 50 (Silice, BET = 50 m²/g) commercialisée par Evonik Industries AG en tant qu'agent anti-mottant.

La composition fluidifiante C2 sous forme poudre est au final constituée de :

| | |
|---|---|
| Polymère éther de polycarboxylate | 97.10 % |
| Silice aerosil® OX 50 | 2,9 % |

Une première composition fluidifiante sous forme poudre C5 selon l'invention est obtenue par atomisation de la composition fluidifiante liquide P2 (solution aqueuse du mélange PCE - APTS). Après obtention de la poudre, on incorpore, par mélange, 3 %, par rapport au poids de la composition fluidifiante C5, de silice aerosil® OX 50.

La composition fluidifiante C5 sous forme poudre est au final constituée de :

| | |
|---|---|
| Mélange sec polymère PCE - APTS (4.05 % d'APTS monohydrate) | 97.10 % |
| Silice aerosil® OX 50 | 2,9 % |

### - Procédé par mise sur support :

Une seconde composition fluidifiante sous forme poudre C6 selon l'invention est obtenue par mise sur support de la composition fluidifiante liquide P2.
Cette mise sur support est réalisée à l'aide d'un mélangeur poudre type ROTO P10® équipé d'un système de séchage sous vide. Une silice support référencée Tixosil® 38 (silice précipitée, BET = 250 m²/g) commercialisée par Rhodia est incorporée dans le mélangeur. L'ensemble est mis à chauffer à 80°C, et la pression est régulée à 380 mBar. Le mélangeur est ensuite alimenté en composition fluidifiante liquide P2 à un débit réglé de façon à viser au final une proportion de 50% en poids de matières actives par rapport au poids de C6. A la fin de l'alimentation en composition fluidifiante P2, le séchage est poursuivi jusqu'à viser une humidité résiduelle inférieure à 6% maximum sur la poudre C6 ainsi obtenue.

Les quantités initiales introduites dans le mélangeur ROTO P10® sont les suivantes:

| | |
|---|---|
| Tixosil® 38 | 790 g |
| P2 | 2210 g |

Après l'opération de mise sur support, la composition fluidifiante C6 sous forme poudre est au final constituée de :

| | |
|---|---|
| Mélange sec polymère PCE - APTS (4,22 % d'APTS monohydrate) | 49.54 % |
| Tixosil 38 | 49.48 % |
| Eau résiduelle | 0.98 % |

### II. Compositions des mortiers testés (Produits utilisés et formulations des mortiers secs)

La composition du mortier autonivelant utilisée pour évaluer les différentes compositions fluidifiantes, selon l'invention et selon l'art antérieur, est précisée dans le tableau II suivant :

**Tableau II**

| **Composants du mortier** | **Fonction** | **Description** | **%** |
|---|---|---|---|
| Ciment alumineux | Liant hydraulique | Ternal® RG | 20,00 |
| Ciment Portland | Liant hydraulique | CEM I 52.5 N | 4,00 |
| Sulfate de calcium semihydrate | Liant hydraulique | Prestia creation | 7,00 |
| Carbonate de calcium | Charge (Filler) | Durcal® 2 | 16,52 |
| Carbonate de calcium | Charge (Filler) | Durcal® 40 | 17,37 |
| Sable siliceux | Charge (Sable) | CV 32 (SIBELCO) granulométrie moyenne 280 µm | 25,57 |
| Sable siliceux | Charge (Sable) | BR 36 (SIBELCO) granulométrie moyenne 180 µm | qsp 100 |
| Polymère vinyle acétate d'éthylène | Additif (résine redispersable) | Vinnapas 5011L | 3,00 |
| | Additif (Agent anti-mousse) | Déhydran 1933 | 0,10 |
| | Additif (régulateur de prise) | Acide tartrique | 0,10 |
| Ether de cellulose | Additif (Agent rhéolonique) | Tylose® H300P2 | 0,10 |
| | Additif (régulateur de prise) | Carbonate de lithium | 0,03 |
| Composition fluidifiante (C2, C5 ou C6) | superplastifiant | | Voir tableau III |
| **Total** | | - | 100,00 |

Les taux des compositions fluidifiantes testées C2, C5 et C6, exprimés en pourcentage massique par rapport au poids total du mortier, sont les suivants :
- Composition fluidifiante C2 : 0.1 %
- Composition fluidifiante C5 : 0.1 et 0.07 %
- Composition fluidifiante C6 : 0.2 et 0.14 % (49,54 % de matières actives).

Les références des mortiers comprenant les différentes compositions fluidifiantes sont rassemblées dans le tableau III suivant.

**Tableau III**

| **Référence du mortier** | **Référence des compositions fluidifiantes incorporées aux enduits** | **Doses d'incorporation des compositions fluidifiantes (% sur formule totale)** | **Quantité de MA* (%)** |
|---|---|---|---|
| M2(0,1) | C2 | 0,10 | 0,10 |
| M5 (0,1) | C5 | 0,10 | 0,10 |
| M5 (0,07) | C5 | 0,07 | 0,07 |
| M6 (0,2) | C6 | 0,20 | 0,10 |
| M6 (0,14) | C6 | 0,14 | 0,07 |

| | | | |
|---|---|---|---|
| *MA : matière active | | | |

A titre de référence, deux autres mortiers ont été testés :
- La formulation « M7 (0.1) », sans composition fluidifiante, mais avec ajout de 0.1 % d'APTS mono hydrate,
- La formulation « M8 (0) », sans composition fluidifiante.

Ces deux mortiers M7 et M8 ne contiennent donc pas de PCE superplastifiant.

Tous les mortiers secs sont obtenus par mélange des matières premières sous forme de poudre à l'aide d'un mélangeur Turbula® de WAB pendant une durée de 10 minutes.

### III. Protocole de caractérisation

### 1. Test d'auto étalement des mortiers liquides

Les mortiers autonivelants sont obtenus par gâchage à l'eau des formulations mentionnées ci-dessus (M2 (0,1), M5 (0,1), M5 (0,07), M6 (0,20) ou M6 (0,14) (taux de gâchage de 24 parties en poids).

En particulier, le gâchage pour les essais est réalisé de la manière suivante:
- l'eau de gâchage est incorporée dans un Bécher métallique et est agitée au disperseur Rayneri® turbotest muni d'une pale en forme d'ancre. La vitesse de mélange est de 240 tours par minute,
- on ajoute 2 kg de mortier sec, en 20 secondes,
- Après l'incorporation de la poudre, le mélange est agité à 800 tours par minute pendant 100 secondes.

L'auto étalement initial est mesuré à une échéance de 2 minutes après la fin du gâchage à l'aide d'un anneau de dimension d = 63 mm, h = 35 mm.

Les résultats sont rassemblés dans le tableau IV.

### 2. Evaluation de la cinétique de fluidification : Méthode 1

L'essai consiste à mesurer en continu l'évolution de la viscosité, aux premiers instants du mélange mortier sec/eau. On utilise un rhéomètre Lamy Rhéomat RM 260 muni d'une hélice à trois pales. L'essai est réalisé dans un flacon en polypropylène de 125 mL.

Protocole opératoire:
- verser 24 g d'eau dans le flacon,
- plonger le mobile du rhéomètre jusqu'à immersion totale de l'hélice,
- peser 100 g du mortier à évaluer,
- paramétrer le rhéomètre (Mode de mesure : viscosité = f (temps), Gradient 500 s-1 , sélection du mobile MK DIN 145),
- déclencher la mesure au moment du versement de la poudre dans l'eau,
- faire l'acquisition des mesures durant 1 minute,
- réitérer l'essai 6 fois,
- sélectionner les essais cohérents (incorporation régulière de la poudre ; présence d'un seul pic régulier),
- effectuer la moyenne des courbes sélectionnées.
- tracer la courbe moyenne contrainte = f (temps) (la contrainte est en unité arbitraire).

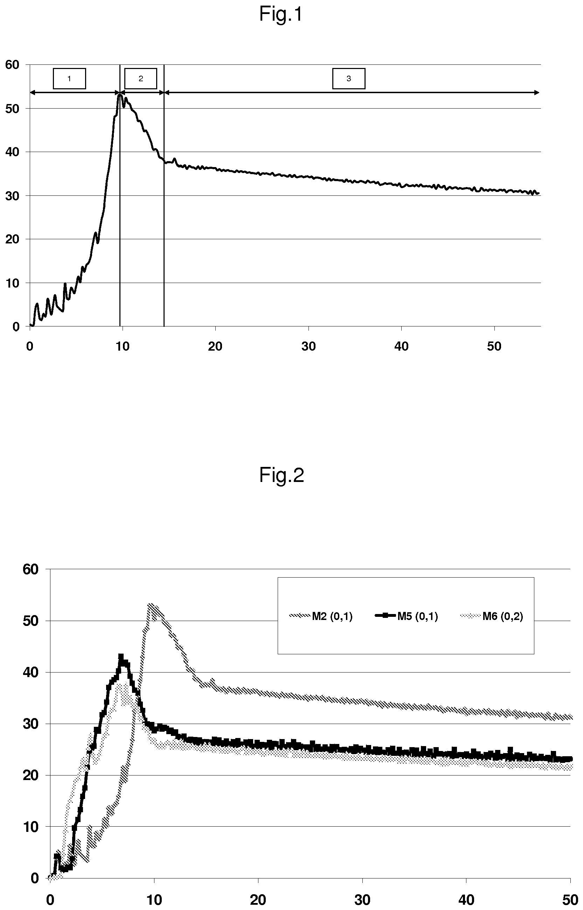

Une courbe typique obtenue selon ce protocole d'évaluation est présentée en figure 1 qui représente l'évolution de la contrainte (en unité arbitraire) en fonction du temps (en secondes).

On distingue trois étapes :
L'étape (1) correspond à la phase de mouillage, c'est-à-dire à l'obtention d'une phase continue entre l'eau et la poudre. Durant cette phase la contrainte augmente puisque l'on passe de celle de l'eau à celle du mortier humide.
L'étape (2) correspond à la phase de dispersion (ou défloculation) des particules par le superplastifiant (PCE seul ou avec l'APTS selon les essais). Durant cette phase la contrainte diminue très fortement et rapidement jusqu'à obtention d'une contrainte quasi stable. Le temps d'atteinte de cette contrainte quasi stable est donc inhérent à la cinétique de fluidification du mortier, liée à l'efficacité du superplastifiant. C'est ce temps qui sera pris comme référence pour comparer les compositions fluidifiantes selon l'invention et selon l'art antérieur.
L'étape 3 correspond à la stabilisation de la viscosité du mortier frais.

Les niveaux de contrainte obtenus sont inversement proportionnels à l'efficacité fluidifiante du PCE.

Plus la hauteur du pic (contrainte) est élevée, plus l'énergie à apporter pour mélanger le mortier à l'eau sera forte.

Plus la contrainte au palier est forte (étape 3), plus il faudra d'énergie pour pomper le mortier fluide.

### 3. Evaluation de la cinétique de fluidification : Méthode 2

Un deuxième protocole a été mis en place afin de mesurer la cinétique de fluidification des compositions fluidifiantes de l'invention.

Le mortier autonivelant est mélangé dans des conditions de mélange « dégradées » selon le protocole suivant :
- verser 24 g d'eau dans un flacon de 125 ml en polyéthylène,
- plonger la pale mélangeuse d'un mélangeur IKA® jusqu'à ce que la surface de l'eau affleure le haut de l'hélice,
- peser 100 g des mortiers à évaluer (M2 (0,1), M5 (0,1), M5 (0,07), M6 (0,20) ou M6 (0,14)),
- démarrer le mélangeur IKA®, régler la vitesse à 400 tours par minute,
- incorporer en 5 secondes et pour chaque essai les 100 g de poudre à l'aide d'un cône en papier,
- arrêter le mélange à t = 30 secondes,
- réitérer l'essai pour des temps de mélange de 60, 90, 120 et 150 secondes.

Pour chaque essai, aux différents temps de mélange, la viscosité est mesurée en fonction du gradient de vitesse à l'aide du Rhéomat® RM260 selon les conditions suivantes :
- mobile MK DIN 125.
- effectuer un pré-cisaillement à 50 s⁻¹ pendant 10 secondes,
- puis un balayage pas à pas aux gradients de vitesse suivants: 10, 20, 50, 100 et 200 s⁻¹ pendant 30 s par gradient (réaliser 10 points de mesure par gradient),
- enregistrer les valeurs de contrainte en fonction du gradient de vitesse.

Les valeurs de contraintes retenues, pour mesurer l'évolution de la rhéologie en fonction des divers temps de mélange, sont celles mesurées à 100 s-1.

La précision de la mesure est de +/- 30 Pa.

Les valeurs de contraintes observées selon ce protocole sont plus élevées que celles correspondant à la méthode 1 du fait d'un gradient de vitesse différent et des géométries de mobiles différentes.

### IV. Résultats

### 1. Auto-étalement

Les valeurs des diamètres d'étalement des mortiers autonivelants sont données dans le tableau ci-après.

Pour rappel, les compositions fluidifiantes selon l'invention sont référencées C5 et C6, la composition fluidifiante C5 étant obtenu par co-atomisation et la composition fluidifiante C6 étant obtenue par le procédé de mise sur support. La teneur en matières actives de C6 est d'environ 50%.

**Tableau IV**

| **Références des mortiers** | **Références des compositions fluidifiantes** | **Dosage (% pondéral/mortier sec)** | **Auto étalement t = 2 mm (mm)** |
|---|---|---|---|
| M2 (0,1) | C2 | 0,1 | 255 |
| M5 (0,1) | C5 | 0,1 | 275 |
| M5 (0,07) | C5 | 0,07 | 255 |
| M6 (0,14) | C6 | 0,14 (0,07 % de MA) | 265 |

La composition fluidifiante C5 selon l'invention a été testée à la même dose d'incorporation, dans le mortier, que la composition fluidifiante C2 de référence, soit 0,1% de matière active (MA). On observe que la valeur d'étalement obtenue pour l'enduit fluide M5(0,1) comprenant la composition fluidifiante C5 selon l'invention est supérieure à celle obtenue pour l'enduit fluide selon l'art antérieur (M2(0,1)).

De plus, un étalement identique est obtenu entre l'enduit fluide selon l'art antérieur M2(0,1) à 0,1% de MA (PCE) et l'enduit fluide selon l'invention M5(0,07) comprenant 30 % en poids de moins de MA que l'enduit selon l'art antérieur. Ce constat est également fait pour la formulation d'enduit M6(0,14) comprenant 0,14% de la composition fluidifiante C6 obtenue par mise sur support selon l'invention. Un dosage de 0.14 % soit 0.07 % de MA par rapport à la formule totale permet d'obtenir le même étalement que la formulation d'enduit selon l'art antérieur à base de la composition fluidifiante standard C2 dosé à 0.1 %.

Les compositions fluidifiantes selon l'invention confèrent par conséquent aux formulations de mortiers autonivelants selon l'invention des valeurs d'auto étalement supérieures à celles obtenues avec un éther de polycarboxylate selon l'art antérieur.

Les compositions fluidifiantes selon l'invention obtenues par les deux procédés de séchage permettent également de diminuer les doses d'incorporation tout en conservant un niveau de fluidité des mortiers autonivelants équivalent à celui obtenu avec un éther de polycarboxylate selon l'art antérieur.

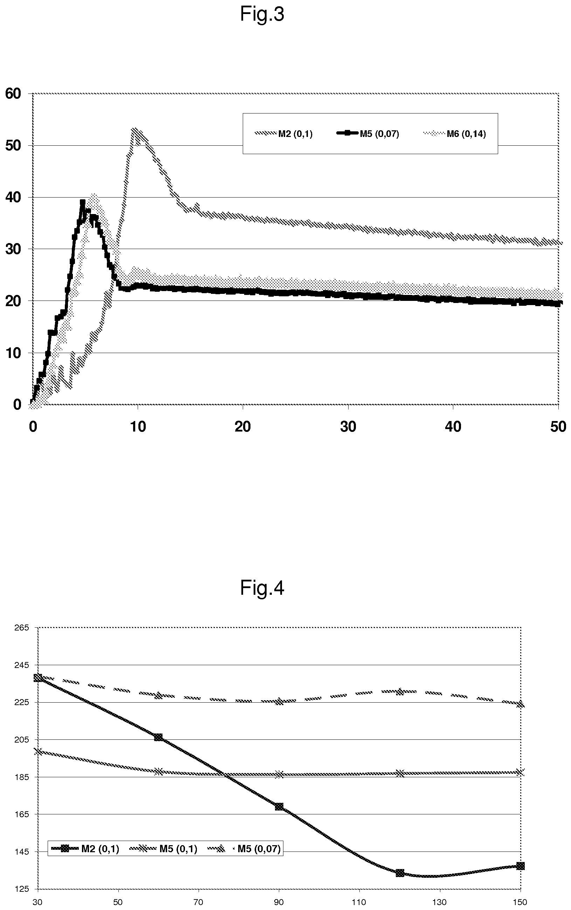

### 2. Cinétique de fluidification : Méthode 1 (figures 2 et 3)

Les **figures 2** **et** **3** représentent, pour les différentes compositions de mortier, l'évolution de la contrainte (en unité arbitraire) en fonction du temps (en secondes).

La figure 2 compare les mortiers contenant les compositions fluidifiantes C2, C5 et C6, pour un dosage à 0,1% en matière active (donc 0,2% de C6).

On constate que les mortiers de l'invention M5 et M6 présentent des pics de contraintes aux premiers instants de gâchage de plus faible amplitude, par rapport au mortier témoin M2, l'optimum étant également atteint à des temps plus courts. Les mortiers de l'invention se dispersent donc plus aisément et plus rapidement. Ils nécessiteront donc moins d'énergie pour être gâchés et pompés. Leur viscosité est stabilisée vers 10 secondes, contre 15 secondes pour le mortier témoin. Cela signifie qu'un enduit selon l'invention atteindra sa fluidité cible en environ 30% moins de temps qu'un enduit formulé avec une composition fluidifiante selon l'art antérieur.

La **figure 3** compare les mortiers contenant les compositions fluidifiantes C5 et C6, pour un dosage à 0,07% en matière active, et le mortier témoin contenant la composition fluidifiante C2, pour un dosage en matière active de 0,1%. La diminution du taux de composition fluidifiante, selon l'invention, n'a pas altéré la cinétique de dispersion.

Ce résultat confirme qu'il est possible d'utiliser la composition fluidifiante, selon l'invention, à un taux plus faible que celui d'un éther de polycarboxylate selon l'art antérieur.

### 3. Cinétique de fluidification : Méthode 2 (figure 4)

La **figure 4** reporte l'évolution de la contrainte de cisaillement à 100 s⁻¹, pour différentes durées (en secondes) de gâchage du mortier sec avec l'eau.

Le mortier M5, formulé avec la composition fluidifiante selon l'invention, développe une contrainte sous cisaillement très stable, dès 30 secondes de mélange. Cette stabilité pour des durées de mélange très courtes (30 secondes) est observée quelque soit le taux de composition fluidifiante C5 (0.1% et 0.07%)

A l'opposé, la stabilisation de la contrainte générée par le mortier témoin M2 selon l'art antérieur n'est observée que pour des temps de malaxage plus longs, de l'ordre de 120 secondes.

L'atteinte d'une stabilité de contrainte dès 30 secondes de mélange pour M5 comparativement à 120 secondes pour M2 traduit une meilleure cinétique de fluidification apportée par la composition fluidifiante C5 selon l'invention.

L'Acide Para Toluène Sulfonique (APTS) permet donc d'améliorer la cinétique de fluidification de l'éther de polycarboxylate.

### 4. Effet intrinsèque de l'APTS sur la fluidification de la formulation d'enduit

L'impact éventuel de l'ajout de l'APTS seul a été évalué en effectuant une mesure de profil rhéologique de trois formulations de mortiers autonivelants :
« M5 (0.1) » formulé avec 0.1 % de composition fluidifiante C5,
« M8 (0) » dans lequel aucun additif n'a été ajouté (0% d'APTS et 0% de PCE),
« M7 (0.1) » formulé avec 0.1 % d'APTS monohydrate (sans aucun PCE).

Ces formulations ont été gâchées avec un taux d'eau nominal de 24 parties en poids par rapport au poids de formulation de mortier sec. Un temps d'attente de 4 minutes est observé avant de placer la pâte ainsi obtenue dans un rhéomètre Rheomat RM 260 équipé d'un mobile MK DIN 145.

Un pré-cisaillement au gradient de vitesse 50 s⁻¹ est effectué afin de stabiliser la pâte avant les mesures, qui sont alors plus reproductibles.

Ensuite, on effectue un balayage en gradient selon les incréments de vitesse de cisaillement donnés dans le tableau ci-après :

**Tableau V**

| | | | | | | | | | | | |
|---|---|---|---|---|---|---|---|---|---|---|---|
| Gradient (s⁻¹) | 0.1 | 0.2 | 0.5 | 1 | 2 | 5 | 10 | 20 | 50 | 100 | 200 |
| Temps de mesure (secondes) | 20 | 20 | 20 | 10 | 10 | 10 | 10 | 10 | 10 | 5 | 5 |

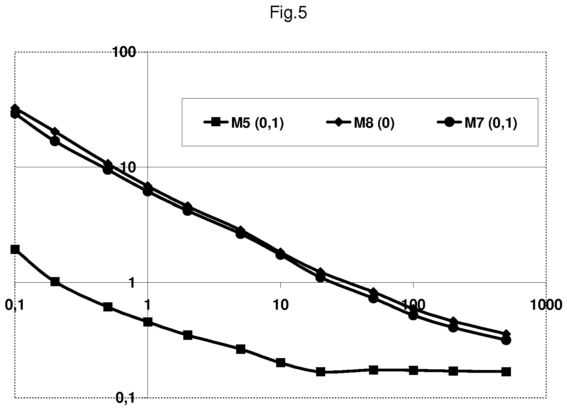

Les courbes des variations de viscosité (Pa.s) en fonction du gradient de cisaillement (s-1) sont reportées en **figure 5****.**

L'enduit M7 (0.1) formulé avec uniquement de l'APTS à la place de la composition fluidifiante présente le même profil rhéologique que l'enduit M8 (0) dépourvu de composition fluidifiante et d'APTS. A l'opposé, l'enduit M5 (0.1), obtenu selon l'invention, présente une viscosité inférieure aux deux autres enduits testés.

Ceci démontre que l'APTS seul n'amène aucun effet fluidifiant au mortier .C'est bien son association avec l'éther de polycarboxylate qui permet d'augmenter la cinétique de fluidification, par rapport à l'éther de polycarboxylate seul.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Composition fluidifiante comprenant au moins un superplastifiant choisi parmi les polymères éthers de polycarboxylates, **caractérisée en ce qu'**elle comprend 1 à 20 parties en poids, d'au moins un acide sulfonique d'hydrocarbure aromatique ou d'un de ses sels choisi parmi les sels alcalins, les sels alcalinoterreux ou un de leurs mélanges, pour 100 parties en poids de superplastifiant, ledit superplastifiant représentant au moins 40 %, en poids, par rapport au poids total de ladite composition fluidifiante sèche.

2. Composition fluidifiante selon la revendication 1, **caractérisée en ce que** les éthers de polycarboxylates sont choisis parmi les copolymères d'acides carboxyliques et d'ester carboxyliques de poly (alkylène glycol), les copolymères d'acides carboxylique et d'amide de poly (alkylène glycol), les copolymères d'acides carboxyliques et d'imide de poly (alkylène glycol), les copolymères d'acides carboxyliques et d'éthers vinyliques de poly (alkylène glycol), copolymères d'acides carboxyliques et d'éthers (méth)allyliques de poly (alkylène glycol), copolymères d'acides carboxyliques et d'éthers d'isoprénol de poly (alkylène glycol), neutralisés ou non neutralisés, ou un de leurs mélanges.

3. Composition fluidifiante selon la revendication 1 ou 2, **caractérisée en ce que** l'acide sulfonique d'hydrocarbure aromatique est choisi parmi l'acide benzène sulfonique, l'acide p-phénol sulfonique, l'acide crésol sulfonique, l'acide o-crésol sulfonique, l'acide m-Crésol sulfonique, l'acide para-toluène-sulfonique, l'acide 2,4-xylène sulfonique, l'acide 2,5-xylène sulfonique, l'acide dodécyl-benzène sulfonique, les acides alkyldiphényloxyde disulfoniques et leurs sels parmi les sels de sodium, potassium, ou un de leurs mélanges.

4. Composition fluidifiante selon l'une quelconque des revendications précédentes, **caractérisée en ce qu'**elle comprend au moins 80% et mieux au moins 90% en poids de superplastifiant par rapport au poids total sec de la composition fluidifiante.

5. Procédé de préparation d'une composition fluidifiante telle que définie dans l'une quelconque des revendications 1 à 4, sous forme liquide ou sous forme de poudre, comprenant une étape de mélange d'au moins un éther de polycarboxylate et d'au moins un acide sulfonique d'hydrocarbure aromatique ou d'un de ses sels choisi parmi les sels alcalins, les sels alcalinoterreux ou un de leurs mélanges, la composition comprenant 1 à 20 parties en poids, dudit acide sulfonique d'hydrocarbure aromatique pour 100 parties en poids du superplastifiant, ledit superplastifiant représentant au moins 40 %, en poids, par rapport au poids total de ladite composition fluidifiante sèche.

6. Procédé de préparation d'une composition fluidifiante sous forme de liquide selon la revendication 5, **caractérisé en ce qu'**il comprend : une étape de mélange dudit éther de polycarboxylate et dudit acide sulfonique d'hydrocarbure aromatique ou d'un de ses sels en solution dans un solvant.

7. Procédé de préparation d'une composition fluidifiante sous forme de poudre selon la revendication 5, comprenant une étape de mélange d'une poudre dudit éther de polycarboxylate et d'une poudre dudit acide sulfonique d'hydrocarbure aromatique ou d'un de ses sels.

8. Procédé de préparation d'une composition fluidifiante sous forme de poudre selon la revendication 5, caractérisé en qu'il comprend :
- une étape de mélange de l'éther de polycarboxylate et de l'acide sulfonique d'hydrocarbure aromatique ou d'un de ses sels en solution dans un solvant, et
- une étape de séchage pour obtenir une composition sous forme de poudre.

9. Mortier sec comprenant au moins un liant hydraulique, **caractérisé en ce qu'**il comprend une composition fluidifiante selon l'une quelconque des revendications 1 à 4.

10. Mortier sec selon la revendication 9, **caractérisé en ce qu'**il comprend, en poids par rapport au poids total dudit mortier sec :
- de 15 à 50% de liant hydraulique,
- de 25 à 80% de charges minérales présentant une répartition granulométrique allant de 0 à 2 mm,
- de 0,01 à 2% de composition fluidifiante,
- de 0 à 5% d'additifs.

11. Mortier sec selon la revendication 9 ou 10, **caractérisé en ce que** le liant hydraulique comprend au moins un ciment alumineux et/ou un ciment Portland et/ou un ou plusieurs sulfates de calcium.

12. Mortier fluide autonivelant obtenu par gâchage à l'eau du mortier sec selon l'une quelconque des revendications 9 à 11, **caractérisé en ce qu'**il présente au moment du gâchage avec l'eau, un ratio pondérai eau/mortier sec inférieur ou égal à 0,5.

13. Procédé de préparation et de mise en oeuvre d'un mortier fluide autonivelant tel que défini dans la revendication 12, sur un revêtement, **caractérisé en ce qu'**il comprend :
a) la préparation du mortier fluide par mélange du mortier sec et d'eau,
b) éventuellement, le pompage du mortier fluide,
c) l'application du mortier fluide sur une surface du revêtement permettant d'aplanir ladite surface sur lequel il est appliqué.

14. Béton comprenant au moins un liant hydraulique et au moins des granulats, tels que des graviers, des gravillons, et de l'eau, **caractérisé en ce qu'**il comprend une composition fluidifiante selon l'une quelconque des revendications 1 à 4.

15. Utilisation d'une composition fluidifiante selon l'une des revendications 1 à 4 comme superplastifiant dans une composition comprenant au moins un liant hydraulique.

## Patentansprüche

1. Netzmittel, umfassend mindestens einen Betonverflüssiger, ausgewählt aus Polycarboxylatetherpolymeren, **dadurch gekennzeichnet, dass** es 1 bis 20 Gewichtsteile, je 100 Gewichtsteile eines Betonverflüssigers, mindestens einer aromatischen Kohlenwasserstoffsulfonsäure oder eines Salzes davon, ausgewählt aus alkalischen Salzen, erdalkalischen Salzen oder einer Mischung davon, umfasst, wobei der Betonverflüssiger mehr als 40 Gew.-%, bezogen auf das Gesamtgewicht des trockenen Netzmittels, darstellt.

2. Netzmittel nach Anspruch 1, **dadurch gekennzeichnet, dass** die Polycarboxylatether ausgewählt sind aus Copolymeren von Carbonsäuren und Poly(alkylenglycol)carbonsäureestern, Copolymeren von Carbonsäuren und Poly(alkylenglycol)amid, Copolymeren von Carbonsäuren und Poly(alkylenglycol)imid, Copolymeren von Carbonsäuren und Poly(alkylenglycol)vinylethern, Copolymeren von Carbonsäuren und Poly(alkylenglycol)(meth)allylethern, Copolymeren von Carbonsäuren und Poly(alkylenglycol)isoprenolethern, die neutralisiert oder nicht neutralisiert sind, oder einer Mischung davon.

3. Netzmittel nach Anspruch 1 oder 2, **dadurch gekennzeichnet, dass** die aromatische Kohlenwasserstoffsulfonsäure ausgewählt ist aus Benzolsulfonsäure, p-Phenolsulfonsäure, Kresolsulfonsäure, o-Kresolsulfonsäure, m-Kresolsulfonsäure, para-Toluolsulfonsäure, 2,4-Xylolsulfonsäure, 2,5-Xylolsulfonsäure, Dodecylbenzolsulfonsäure, Alkyldiphenyloxiddisulfonsäuren und Salzen davon, aus Natrium-, Kaliumsalzen oder einer Mischung davon.

4. Netzmittel nach einem der vorhergehenden Ansprüche, **dadurch gekennzeichnet, dass** es mindestens 80 Gew.-% und besser mindestens 90 Gew.-% Betonverflüssiger, bezogen auf das Gesamttrockengewicht des Netzmittels, umfasst.

5. Verfahren zur Herstellung eines Netzmittels nach einem der Ansprüche 1 bis 4 in flüssiger Form oder in Form eines Pulvers, umfassend einen Schritt zum Mischen mindestens eines Polycarboxylatethers und mindestens einer aromatischen Kohlenwasserstoffsulfonsäure oder einem Salz davon, ausgewählt aus den alkalischen Salzen, den erdalkalischen Salzen oder einer Mischung davon, wobei die Zusammensetzung 1 bis 20 Gewichtsteile der aromatischen Kohlenwasserstoffsulfonsäure je 100 Gewichtsteile Betonverflüssiger umfasst, wobei der Betonverflüssiger mehr als 40 Gew.-%, bezogen auf das Gesamtgewicht des trockenen Netzmittels, darstellt.

6. Verfahren zum Herstellen eines Netzmittels in flüssiger Form nach Anspruch 5, **dadurch gekennzeichnet, dass** es umfasst: einen Schritt zum Mischen des Polycarboxylatethers und der aromatischen Kohlenwasserstoffsulfonsäure oder eines Salzes davon in Lösung in einem Lösungsmittel.

7. Verfahren zum Herstellen eines Netzmittels in Form eines Pulvers nach Anspruch 5, umfassend einen Schritt zum Mischen eines Pulvers des Polycarboxylatethers und eines Pulvers der aromatischen Kohlenwasserstoffsulfonsäure oder eines Salzes davon.

8. Verfahren zum Herstellen eines Netzmittels in Form eines Pulvers nach Anspruch 5, **dadurch gekennzeichnet, dass** es umfasst:
- einen Schritt zum Mischen des Polycarboxylatethers und der aromatischen Kohlenwasserstoffsulfonsäure oder eines Salzes davon in Lösung in einem Lösungsmittel, und
- einen Schritt zum Trocknen, um eine Zusammensetzung in Form eines Pulvers zu erhalten.

9. Trockenmörtel, umfassend mindestens ein hydraulisches Bindemittel, **dadurch gekennzeichnet, dass** er ein Netzmittel nach einem der Ansprüche 1 bis 4 umfasst.

10. Trockenmörtel nach Anspruch 9, **dadurch gekennzeichnet, dass** er, in Gewichtsanteilen bezogen auf das Gesamtgewicht des Trockenmörtels, umfasst:
- 15 bis 50 % hydraulisches Bindemittel,
- 25 bis 80 % mineralische Füllstoffe, die eine Korngrößenverteilung zwischen 0 und 2 mm aufweisen,
- 0,01 bis 2 % Netzmittel,
- 0 bis 5 % Additive.

11. Trockenmörtel nach Anspruch 9 oder 10, **dadurch gekennzeichnet, dass** das hydraulische Bindemittel mindestens einen Tonerdezement und/oder einen Portlandzement und/oder ein oder mehrere Calciumsulfate umfasst.

12. Selbstnivellierender Fließmörtel, erhalten durch Anrühren des Trockenmörtels nach einem der Ansprüche 9 bis 11 mit Wasser, **dadurch gekennzeichnet, dass** er zum Zeitpunkt des Anrührens mit Wasser ein Gewichtsverhältnis Wasser/Trockenmörtel kleiner oder gleich 0,5 aufweist.

13. Verfahren zum Herstellen und Aufbringen eines selbstnivellierenden Fließmörtels nach Anspruch 12, auf eine Beschichtung, **dadurch gekennzeichnet, dass** es umfasst:
a) die Herstellung des Fließmörtels durch Mischen des Trockenmörtels mit Wasser,
b) gegebenenfalls Pumpen des Fließmörtels,
c) Auftragen des Fließmörtels auf eine Oberfläche der Beschichtung, um die Oberfläche, auf die er aufgetragen wird, zu glätten.

14. Beton, umfassend mindestens ein hydraulisches Bindemittel und mindestens Zuschlagstoffe, wie beispielsweise Kiese, Splitte, Wasser, **dadurch gekennzeichnet, dass** er ein Netzmittel nach einem der Ansprüche 1 bis 4 umfasst.

15. Verwendung eines Netzmittels nach einem der Ansprüche 1 bis 4 als Betonverflüssiger in einer Zusammensetzung, die mindestens ein hydraulisches Bindemittel umfasst.

## Claims

1. A fluidizing composition comprising at least one superplasticizer chosen from polycarboxylate ether polymers, **characterized in that** it comprises from 1 to 20 parts by weight, of at least one aromatic hydrocarbon sulfonic acid or one of its salts chosen from alkali salts, alkaline-earth salts or one of their mixtures, for 100 parts by weight of superplasticizer, said superplasticizer representing at least 40%, by weight, relative to the total weight of the dry fluidizing composition.

2. A fluidizing composition according to claim 1, **characterized in that** polycarboxylate ethers are chosen from copolymers of carboxylic acids and poly(alkylene glycol) carboxylic ester, copolymers of carboxylic acids and poly(alkylene glycol) amid, copolymers of carboxylic acids and poly(alkylene glycol) imide, copolymers of carboxylic acids and poly(alkylene glycol) vinyl ethers, copolymers of carboxylic acids and poly(alkylene glycol) (meth)allyl ethers, copolymers of carboxylic acids and poly(alkylene glycol) isoprenol ethers, neutralized or not, or one of their mixtures.

3. A fluidizing composition according to claim 1 or 2, **characterized in that** the aromatic hydrocarbon sulfonic acid is chosen from benzenesulfonic acid, p-phenolsulfonic acid, cresolsulfonic acid, o-cresolsulfonic acid, m-cresolsulfonic acid, para-toluenesulfonic acid, 2,4-xylenesulfonic acid, 2,5-xylenesulfonic acid, dodecyl-benzenesulfonic acid, alkyldiphenyloxide disulfonic acids and salts thereof, from sodium and potassium salts, or one of their mixtures.

4. A fluidizing composition according to any one of preceding claims, **characterized in that** it comprises at least 80% and preferably at least 90% by weight of a superplasticizer as compared to the fluidizing composition dry total weight.

5. A method for preparing a fluidizing composition according to any one of preceding claims 1 to 4, in a liquid form or in the form of a powder, comprising a step for mixing together at least one polycarboxylate ether and at least one aromatic hydrocarbon sulfonic acid or one of its salts chosen from alkali salts, alkaline-earth salts or one of their mixtures, the composition comprising 1 to 20 parts by weight of said aromatic hydrocarbon sulfonic acid for 100 parts by weight of the superplasticizer, said superplasticizer representing at least 40%, by weight, relative to the total weight of the dry fluidizing composition.

6. A method for preparing a fluidizing composition in the form of a liquid according to claim 5, **characterized in that** it comprises a step for mixing said polycarboxylate ether and said aromatic hydrocarbon sulfonic acid or one of its salts in solution in a solvent.

7. A method for preparing a fluidizing composition in the form of a powder according to claim 5, comprising a step for mixing a powder of said polycarboxylate ether and a powder of said aromatic hydrocarbon sulfonic acid or one of its salts.

8. A method for preparing a fluidizing composition in the form of a powder according to claim 5, **characterized in that** it comprises:
- a step for mixing the polycarboxylate ether and the aromatic hydrocarbon sulfonic acid or one of its salts in solution in a solvent, and
- a drying step to obtain a composition in the form of a powder.

9. A dry mortar comprising at least one hydraulic binder, **characterized in that** it comprises a fluidizing composition according to any one of preceding claims 1 to 4.

10. A dry mortar according to claim 9, **characterized in that** it comprises, by weight as compared to the dry mortar total weight:
- from 15 to 50% of hydraulic binder,
- from 25 to 80% of mineral fillers having a particle size distribution ranging from 0 to 2 mm,
- from 0.01 to 2% of the fluidizing composition,
- from 0 to 5% of additives.

11. A dry mortar according to claim 9 or 10, **characterized in that** the hydraulic binder comprises at least one high-alumina cement and/or one Portland cement and/or one or more calcium sulfates.

12. A self-leveling fluid mortar obtained through mixing together with water the dry mortar according to any one of preceding claims 9 to 11, **characterized in that** it has at the mixing time with water, a water /dry mortar weight ratio lower than or equal to 0.5.

13. A method for preparing and implementing onto a coating a self-leveling fluid mortar such as defined in claim 12, **characterized in that** it comprises:
a) the preparation of the fluid mortar by mixing together the dry mortar with water,
b) optionally, the pumping of the fluid mortar,
c) the application of the fluid mortar onto a surface of the coating to make even said surface onto which it is applied.

14. A concrete comprising at least one hydraulic binder and at least aggregates, such as gravels, broken gravels, water, **characterized in that** it comprises a fluidizing composition according to any one of preceding claims 1 to 4.

15. Use of a fluidizing composition according to any one of claims 1 to 4 as a superplasticizer in a composition comprising at least one hydraulic binder.
